# EUROPEAN PATENT APPLICATION

(11) **EP 3 089 137 A1**
(43) Date of publication of application: **02.11.2016**
(21) Application number: 16164666.6
(22) Date of filing: 11.04.2016
(51) Int. Cl.: G08G 5/00, G08G 5/04, G05D 1/10

(54) **COLLISION-AVOIDANCE-DEVICE**

(30) Priority: 09.04.2015 EP 15163042
(71) Applicant: AEVO GmbH, 80992 München (DE)
(72) Inventor: Graciano, Joao Paulo Parreira Lourinho, 80805 München (DE); de Sousa, José Duarte, 81543 München (DE)
(74) Representative: Maiwald Patentanwalts GmbH

(57) **Abstract**

The invention relates to a collision-avoidance-device (101) for a flight vehicle (100). The collision-avoidance-device is configured for receiving a position information (111) of an obstacle (104) via a first input interface (105). Furthermore the collision-avoidance-device is configured for receiving a steering command via a second input interface. Furthermore, the collision-avoidance-device comprises a processing unit (106) that is configured for determining an adjustment of a steering parameter of the flight vehicle by processing the received position information of the obstacle. Said adjustment to the steering parameter is then transmitted to a steering device (102) of the flight vehicle via an output interface (107) such that the flight vehicle changes its flight behavior or flight profile such that it avoids a collision with the obstacle.

## Description

### Technical field

The invention relates to collision-avoidance of flight vehicles. In particular, the present invention relates to a collision-avoidance-device for a flight vehicle, to a flight vehicle with a collision-avoidance-device, a system comprising a sensor and the collision-avoidance device, and to a method of avoiding a collision of a flight vehicle with an obstacle.

### Technical background

Collision-avoidance-systems are relevant for flight vehicles for avoiding collisions of a flight vehicle with other objects, for example, with other flight vehicles. In the worst case scenario, such collisions can lead to the destruction of the vehicle, to human casualties, if there are passengers in one of the flight vehicles, and/or to the destruction of third-party property.

One common collision-avoidance-system is the traffic alert and collision-avoidance-system (TCAS), which is based on radar transponder signals and is fitted to all aircrafts with a maximum takeoff mass of over 5700 kg or authorized to carry more than 19 passengers. TCAS monitors the airspace around the flight vehicle for other flight vehicles equipped with a corresponding active transponder (independent of ground-based air traffic control) and warns pilots, if another aircraft may present a threat of a mid air collision. The TCAS comprises a radar that detects other flight vehicles in the vicinity of the aircraft, a processor which receives the radar data, pressure altitude, radar altitude, and discrete aircraft status inputs from the aircraft itself. Furthermore, a program of the TCAS calculates the avoidance maneuver and communicates it to the flight crew such that the flight crew can avoid a collision.

### Summary of the invention

It may be seen as an object of the invention to provide an improved collision-avoidance for a flight vehicle.

This object is solved by the subject-matter of the independent claims. Further embodiments and advantages are presented in the dependent claims.

A first aspect of the invention relates to a collision-avoidance-device for a flight vehicle. The collision-avoidance-device comprises a first input interface configured for receiving a position information of an obstacle. Furthermore, the collision-avoidance-device comprises a second input interface configured for receiving a steering command for the flight vehicle. Furthermore, the collision-avoidance-device comprises a processing unit configured for determining a correction to a steering parameter of the flight vehicle on the basis of the received position information. Moreover, the collision-avoidance-device comprises an output interface configured for transmitting the determined correction to the steering parameter to a steering device of the flight vehicle.

In other words, the first aspect of the invention may relate to a collision-avoidance-device for a flight vehicle that is configured for carrying out the following method: Firstly, receiving a position information of an obstacle. Secondly, determining a correction to a steering parameter of the flight vehicle on the basis of the received position information. Thirdly, transmitting the determined correction to the steering parameter to a steering device of the flight vehicle.

If desired the processing unit can also be configured for determining a correction to a steering parameter of the flight vehicle on the basis of the received position information and on the basis of the received steering command. In this embodiment, the method described just before would comprise the additional step of receiving a steering command for the flight vehicle.

It may be seen as a gist of the invention to provide a collision-avoidance-device that is configured for receiving a position information of an obstacle from an arbitrary source. In other words, the collision-avoidance-device or the processing unit of the collision-avoidance-device may be configured for actively requesting the position information via the first input interface. The source may, for example, be a sensor. Furthermore, the source may also be a database, for example, where the positions of different obstacles are stored. The data obtained by the source (e.g. the sensor) may be processed in some way before it is transmitted to the collision-avoidance-device. For example, the data determined by the source (e.g. the sensor) may be processed for obtaining the position information before the position information is received by the collision-avoidance-device. In this way, the data determined by the source may also be used by other devices of the flight vehicle.

The processing unit may further be configured for receiving a steering command. The steering command may comprise one or more steering parameters of the flight vehicle, for example, a parameter selected from the group consisting of roll, pitch, yaw, throttle, lift and any combination thereof. Furthermore, the steering command can originate from an operator of the collision-avoidance-device or from an autopilot.

The processing unit may further be configured for determining a correction to a steering parameter of the flight vehicle on the basis of the received position information and, if desired, on the basis of the received steering command such that a collision between the flight vehicle and the obstacle is avoided. In other words, the correction to the steering parameter may change the flight behavior of the flight vehicle in such a way that a collision with the obstacle is avoided. This determined correction to the steering parameter may then be transmitted to a steering device of the flight vehicle such that the transmitted correction to the steering parameter is added to a corresponding steering parameter in order to avoid the collision between the flight vehicle and the obstacle. Thus, the collision-avoidance-device may be configured for determining an adjustment of a steering parameter for avoiding a collision between the flight vehicle and an obstacle.

In the context of the present invention, the collision-avoidance-device may relate to an electronic device that is configured for avoiding a collision between a flight vehicle and an obstacle. For example, the collision-avoidance-device may comprise a processing unit in the form of a computer chip, an integrated circuit (IC), an application specific integrated circuit (ASIC), or another programmable electronic component. The collision-avoidance-device may be provided as a separate unit such that a flight vehicle can be extended with the collision-avoidance-device in order to have the collision-avoidance-functionality implemented.

The flight vehicle may refer to any kind of flying machine. For example, the flight vehicle may be an aircraft, a drone, a helicopter, a lighter-than-air-vehicle, or a micro air vehicle. Moreover, the flight vehicle may also be a space vehicle, for example, a launch vehicle, a spacecraft, or a satellite. Moreover, the flight vehicle may be a manned or an unmanned flight vehicle. If the flight vehicle is an unmanned vehicle, it may be steered by an operator, who is on the ground, and/or by an autopilot of the flight vehicle. Moreover, also in case the flight vehicle is a manned flight vehicle, it may be steered by an autopilot.

Under an input interface, the skilled person may understand a unit of the collision-avoidance-device which is adapted for receiving input data and which is configured for transmitting said input data to the processing unit. Moreover, the processing unit may be configured for actively requesting the data via the input interface. Accordingly, the skilled person may understand under an output interface a unit which is configured for transmitting output data from the processing unit to another device, which is not necessarily part of the collision-avoidance-device.

The obstacle may refer to any kind of obstacles. For example, the obstacle may be another flight vehicle, a building, a natural barrier, a part of the landscape, or a human being. The position information of the obstacle may comprise coordinates defining a position of the obstacle in space and/or one or more dimensions defining a size of the obstacle. In the context of the present invention the position information may refer to a position of one or more points on the surface of the obstacle. The position information may further refer to a position of an extremity of the obstacle. The position may be defined relative to the flight vehicle. Thus, it may be not necessary to provide the collision-avoidance-device with absolute positions of the obstacle. Moreover, it shall be noted that the first input interface may also be configured for receiving more than one position information of more than one obstacles. Thus, the first input interface may be configured for receiving at least one position information of at least one obstacle.

As mentioned before, the processing unit may comprise a computer chip, an IC, an ASIC, or another programmable electronic component. In other words, the processing unit may be configured for processing the position information received by the first input interface and, if desired, on the basis of the steering command received by the second input interface for determining a correction to a steering parameter of the flight vehicle. Under a steering parameter of the flight vehicle the skilled person may understand a parameter describing a flight property or flight characteristic of the flight vehicle. The correction to the steering parameter of the flight vehicle may refer to a quantity which is to be added to a steering parameter such that a collision between the flight vehicle and the obstacle is avoided. Furthermore, the processing unit may also be configured for determining more than one correction to more than one steering parameter of the flight vehicle on the basis of the received position information. For example, there may be a functional relationship or another kind of relationship between the correction to the steering parameter and the received position information.

A steering parameter may include any parameter which is involved and/or contributes to the steering and/or the flight behavior of the flight vehicle. The correction to the steering parameter may be a value that, when sent to the steering device and added to the steering parameter, corrects the steering parameter in such a way that the steering of the flight vehicle is changed, i.e. such that the flight characteristics or flight profile of the flight vehicle is modifed, for avoiding a collision with the obstacle.

The steering device may relate to a device of the flight vehicle that is configured for receiving or generating steering commands. For example, such steering commands may be issued by an operator and may be received by the steering device. The steering device may also include an autopilot of the flight vehicle which generates steering parameters of the flight vehicle automatically. Thus, the steering device and the autopilot may refer to the same unit. However, the steering device and the autopilot may also be different units of the flight vehicle.

In other words, the collision-avoidance-device may be configured for assisting flight vehicles in avoiding collisions by providing the steering device of the flight vehicles with corrections to a steering parameter or to a plurality of steering parameters of the flight vehicle. These corrections may be calculated in real-time in order to guarantee that the vehicle can change the flight characteristics in order to avoid any potential collision.

An advantage of the collision-avoidance-device of the present invention is that the collision-avoidance-device is not dependent on a particular kind of sensor (e.g. infrared sensor), as long as the first input interface receives a position information of an obstacle. Furthermore, the collision-avoidance-device may be provided separately from a sensor and can thus be integrated in any place in a flight vehicle independently from the sensor. Moreover, the collision-avoidance-device may be configured for receiving information that is defined relative to an obstacle. Thus, the collision-avoidance-device may not require absolute positions and may thus not require an absolute positioning sensor in form of a GPS, GLONASS, GALILEO, etc. Thus, the collision-avoidance-device may also work properly if the flight vehicle (e.g. the micro air vehicle) comprises no GPS or in places where there is no GPS reception (e.g. in or near buildings).

Moreover, the collision-avoidance-device may be configured for only outputting or transmitting a correction to a steering parameter and not a substitute command. Thus, the collision-avoidance-device may extend an existing steering device of a flight vehicle instead of replacing the steering device of the flight vehicle. Thus, the collision-avoidance-device may be configured for extending a working flight vehicle with the collision-avoidance functionality.

According to an exemplary embodiment of the invention, the collision-avoidance-device itself does not comprise any sensor for detecting an obstacle.

According to an exemplary embodiment of the invention, the collision-avoidance-device itself does not comprise any sensor for absolute positioning of the flight vehicle. For example, the collision-avoidance-device may not comprise any GPS-sensor or alike.

The processing unit may, e.g., be configured to determine whether there is a need for a correction to a steering parameter based on the steering command. For example, if the operator decelerates stronger than necessary, there may be no need to correct the acceleration of the flight vehicle. If the processing unit determines that a correction to the steering parameter is necessary, the processing unit may calculate a final value for the correction to the steering command based on a difference between a current steering command and a necessary steering command to avoid a collision with the obstacle.

According to a further exemplary embodiment of the invention, the processing unit is configured for determining a current state of the flight vehicle. Furthermore, the processing unit is configured for determining a distance of the flight vehicle to the obstacle. In other words, the processing unit may be configured for carrying out the method step of determining a current state of the flight vehicle and the method step of determining a distance of the flight vehicle to the obstacle.

The processing unit may, for example, be configured for receiving the current state of the flight vehicle from another device of the flight vehicle, which other device is not necessarily part of the collision-avoidance-device. Moreover, the processing unit itself or the collision-avoidance-device itself may be configured for determining the current state of the flight vehicle. For example, the current state of the flight vehicle may be determined by a sensor, which sensor is either part of the collision-avoidance-device or is provided to the collision-avoidance-device separately.

The current state of the flight vehicle may be defined relative to the obstacle. The current state of the flight vehicle may for example be a flight direction of the flight vehicle relative to the obstacle, a speed of the flight vehicle relative to the obstacle, or another steering parameter of the flight vehicle, for example, roll, pitch, yaw, lift, or throttle.

In the context of the present invention it shall be understood that determining a parameter or a state relative to the obstacle may include determining a parameter or a state relative to a point on the surface of the obstacle and/or to an extremity of the obstacle.

The distance of the flight vehicle to the obstacle may be determined by a sensor of the flight vehicle and be transmitted to the processing unit. The sensor of the flight vehicle determining the distance of the flight vehicle to the obstacle may either be part of the collision-avoidance-device or may be provided to the flight vehicle separately.

According to a further exemplary embodiment of the invention, the processing unit is configured for generating a look-up table on the basis of the received position information, which look-up table comprises a plurality of entries. Each entry of the plurality of entries comprises a direction and a limit to a steering parameter for said direction. Said limit may, e.g., enable the flight vehicle to avoid a collision between the flight vehicle and the obstacle, The processing unit is configured for selecting an entry of the look-up table. Furthermore, the processing unit is configured for determining the correction to the steering parameter on the basis of the limit of the steering parameter of the selected entry and the received steering parameter.

In other words, the processing unit may be configured for carrying out a method comprising the additional step of generating a look-up table on the basis of the received position information. The look-up table comprises a plurality of entries, wherein each entry of the plurality of entries comprises a direction and a limit of a steering parameter for said direction, which correction may allow the flight vehicle to avoid a collision between the flight vehicle and the obstacle. Furthermore, the method comprises the additional steps of selecting an entry of the look-up table and of determining the correction to the steering parameter on the basis of the limit of the steering parameter of the selected entry and the received steering command.

In other words, the processing unit may be configured for determining the correction to the steering parameter in that the processing unit generates the look-up table on the basis of the position information of the obstacle and to select at least one entry of the look-up table which contains a limit of the steering parameter. The processing unit may further be configured for determining the correction to the steering parameter by processing the limit to the steering parameter, e.g. by comparing the limit to the steering parameter and the received steering parameter and to determine the correction to the steering parameter on the basis of said comparison. The selection of the entry of the look-up table may be carried out in different ways as described further below, e.g. on the basis of a current state of the flight vehicle, a direction of a closest obstacle, and/or a received steering command.

The limit of the steering parameter may refer to a boundary or to boundaries of the steering parameter, within which the steering parameter has to be in order to avoid a collision between the flight vehicle and the obstacle. For example, the processing unit may be configured for determining whether the steering command is within the limit defined by the selected entry of the look-up table. The processing unit may be configured for determining a non-vanishing correction to the steering parameter, if the steering command is not within the limit of the selected entry. Moreover, if the steering parameter is within the limit defined by the selected entry, the correction to the steering parameter determined by the processing unit may be zero.

The processing unit may be configured for processing the received position information in order to generate a look-up table that comprises a plurality of entries. In the context of the present invention, the generation of the look-up table may also refer to the update of the look-up table. This look-up table may be stored in a memory unit of the collision-avoidance-device. Thus, the collision-avoidance-device may comprise a memory unit configured for storing the generated and/or updated look-up table. The entries of the look-up table may also be denoted as elements of the look-up table.

Such a look-up table allows determining the correction to the steering parameter necessary for avoiding a collision with the obstacle on short term. In other words, the generation or update of the look-up table may be performed with a lower frequency than the selection of entries of the look-up table for determining the correction to the flight-parameter. Thus, the processing unit may be configured for generating and/or updating the look-up table with a first frequency and for selecting and/or reading out entries of the look-up table with a second frequency, wherein the first frequency may be smaller than the second frequency.

The look-up table may comprise at least two columns. One column of the look-up table may relate to a direction and another column of the look-up table may relate to a limit of a steering parameter of the flight vehicle for said direction. Each entry of the look-up table may comprise a value for the direction and a value for the limit of a steering parameter for said direction. For example, the look-up table may comprise a plurality of entries covering all directions around the flight vehicle in 5° steps. However, the directions around the flight vehicle may also be covered in other steps.

It shall be understood that the processing unit may also be configured for selecting at least one or more than one entry of the look-up table on the basis of the determined current state of the flight vehicle. The first frequency, with which the processing unit generates the look-up table, may be adapted to a frequency, with which a sensor detects obstacles of the flight vehicle. In other words, the look-up table may be generated with a frequency (first frequency) that is lower than a frequency (second frequency) of the steering device or autopilot of the flight vehicle. In this way, the look-up table may be generated with a relatively low frequency whereas the correction of the steering parameter determined on the basis of the entry selected from the look-up table is determined with a higher frequency. In this way, the detecting of obstacles of the flight vehicle, which may be carried out with a lower frequency, and the steering of the flight vehicle, which may be carried out with a higher frequency, are brought together.

The processing unit may be configured for processing the limit of the steering parameter of the selected entry in order to determine the correction to the steering parameter transmitted to the steering device of the flight vehicle. For example, the processing unit may be configured for comparing the limit of the steering parameter of the selected entry with the steering command or a steering parameter defined by the steering command, respectively.

According to a further exemplary embodiment, the processing unit is configured for determining a current state of the flight vehicle and/or for determining a plurality of distances between the flight vehicle and a plurality of obstacles. Furthermore, the processing unit is configured for selecting the entry of the look-up table on the basis of the current state of the flight vehicle and/or on the basis of a direction of a closest obstacle of the plurality of obstacles. Moreover, the processing unit may be configured for determining the closest obstacle and for determining the direction of said closest obstacle.

The exemplary embodiment, in which an entry of the look-up table is selected on the basis of the closest obstacle relates to a first selection mode of the collision-avoidance-device. The first input interface may be configured for receiving additional position information of the plurality of obstacles. The processing unit may be configured for determining the plurality of distances between the flight vehicle and the plurality of obstacles on the basis of said additional position information. The processing unit may further be configured for determining the closest obstacle from the plurality of obstacles on the basis of the plurality of distances and/or the direction in which the closest object is located.

The processing unit may in addition or alternatively be configured for selecting one or more entries of the look-up table on the basis of the determined current state of the flight vehicle. In other words, the processing unit may be configured for selecting the entry of the look-up table that matches the current state of the flight vehicle most.

According to a further exemplary embodiment, the processing unit is configured for determining a current state of the flight vehicle and/or for determining a distance of the flight vehicle to the obstacle. Furthermore, the processing unit is configured for selecting the entry of the look-up table on the basis of a direction of a closest obstacle and/or on the basis of the current state of the flight vehicle.

The person skilled in the art will understand that if there is a single object, then it is considered in the context of the present invention to be the closest one.

According to a further exemplary embodiment of the invention, the processing unit is configured for determining a distance of the flight vehicle to the obstacle. Furthermore, the processing unit is configured for selecting the entry of the look-up table on the basis of the closest obstacle, if the determined distance to the closest obstacle is less than a given distance. Moreover, the processing unit may be configured for determining the closest obstacle and for determining the direction of said closest obstacle.

The given distance may be a predefined value defined by the operator of the flight vehicle. For example, the predefined distance may be 5 m, 10 m, 20 m or another value. This distance may also be taken from a table stored in a memory unit of the collision-avoidance-device. Furthermore, the given distance may also be a function of the current speed. Thus, if the flight vehicle is faster, the given distance can be greater and if the flight vehicle is slower, the given distance can be smaller.

According to another exemplary embodiment of the invention, the processing unit is configured for determining the current state of the flight vehicle, wherein the current state of the flight vehicle comprises a direction of motion of the flight vehicle relative to the obstacle. Furthermore, the processing unit is configured for selecting an entry of the look-up table which entry comprises a direction that deviates least from the determined direction of motion of the flight vehicle.

In other words, the processing unit may be configured to carry out a method with the additional step of selecting an entry of the look-up table which entry comprises a direction that deviates least from the determined direction of motion of the flight vehicle, wherein the current state of the flight vehicle comprises a direction of motion of the flight vehicle relative to the obstacle.

Furthermore, it shall be understood that the processing unit may also be configured for selecting at least one or more than one entry of the look-up table. The processing unit may be configured for selecting an entry of the look-up table, wherein the difference between the direction of motion of the flight vehicle and the direction of the selected entry is minimized. Thus, the processing unit is configured for selecting an entry that matches the direction of motion of the flight vehicle most closely.

According to another exemplary embodiment of the invention, the processing unit is configured for selecting two entries of the look-up table which entries comprise directions that deviate least from the determined direction of motion of the flight vehicle. Furthermore, the processing unit is configured for determining the correction to the steering parameter by interpolating the two limits of the steering parameter of the two selected entries. Thus, the processing unit may be configured for performing a method comprising the additional steps of selecting two entries of the look-up table which entries comprise directions that deviate least from the determined direction of motion of the flight vehicle and determining the correction to the steering parameter by interpolating the two limits of the steering parameter of the two selected entries.

The skilled person understands that the processing unit may also be configured for selecting at least two entries and for interpolating the limits of the selected entries if the entries are selected in another way, e.g. on the basis of a direction of a closest obstacle and/or a direction defined by a received steering command.

In other words, the processing unit may be configured for selecting two entries of the look-up table which comprise directions that match to the determined direction of motion of the flight vehicle most. In other words, the processing unit is configured for selecting two entries such that the direction of one entry is just below the determined direction of motion of the flight vehicle and the direction of the other entry is just above the determined direction of motion of the flight vehicle. Thus, the determined direction of motion of the flight vehicle may be just in between the two directions of the two entries. It shall be understood that the processing unit is configured for selecting at least two entries of the look-up table. Thus, the processing unit may also be configured for selecting more than two entries of the look-up table and to perform the interpolation on the basis of the more than two selected entries.

According to a further exemplary embodiment of the invention, the processing unit is configured for selecting the entry of the look-up table on the basis of the received steering command.

In other words, the selection of the entry of the look-up table as well as the determination of the correction to the steering parameter may be performed on the basis of the received steering command.

According to another exemplary embodiment of the invention, the processing unit is configured for determining a current state of the flight vehicle, wherein the current state of the flight vehicle comprises a first direction of motion of the flight vehicle relative to the obstacle if the collision-avoidance-device determines that the flight vehicle is moving. Furthermore, the steering command is equal to zero or defines a second direction of motion of the flight vehicle. The processing unit is configured for selecting the entry of the look-up table that comprises a direction which deviates least from the first direction if the steering command is zero and the collision-avoidance-device determines that the flight vehicle is moving or wherein the processing unit is configured for selecting the entry of the look-up table that comprises a direction which deviates least from the second direction if the steering command defines the second direction and the collision-avoidance-device determines that the flight vehicle is not moving.

In other words, the collision-avoidance-device is configured for selecting an entry of the look-up table that matches the current state of the flight vehicle closest if the steering command is equal to zero and the speed of the flight vehicle is non-zero or to select an entry of the look-up table that matches the steering command closest if the steering command is non- zero and the speed of the flight vehicle is zero.

The case where the steering command is equal to zero relates to a second selection mode of the collision-avoidance-device and the case where the steering command defines a second direction of motion of the flight vehicle relates to a third selection mode of the collision-avoidance-device. The steering command may for example be equal to zero, if the collision-avoidance-device is capable of receiving a steering command but receives no steering command at the moment.

Moreover, the processing unit may also be configured for selecting two entries of the look-up table, wherein the entries comprise directions that deviate least from the first direction if the steering command is zero. Furthermore, the processing unit may be configured for selecting two entries of the look-up table, wherein the two entries comprise directions which deviate from the second direction if the steering command defines the second direction. The processing unit may then be configured for determining the correction to the steering parameter by interpolating the two limits of the steering parameter of the two selected entries.

Moreover, it shall be understood that the explanations relating to the look-up table given with reference to other exemplary embodiments also apply to this exemplary embodiment.

According to a further exemplary embodiment of the invention, the processing unit is configured for determining a current state of the flight vehicle, wherein the current state of the flight vehicle comprises a first direction of motion of the flight vehicle. Furthermore, the steering command from the operator defines a second direction of motion of the flight vehicle. The processing unit is configured for selecting an entry of the look-up table that comprises a direction which lies in between the first direction of motion and the second direction of motion of the flight vehicle.

In other words, the processing unit may be configured for selecting an entry that is a compromise between the first direction of motion and the second direction of motion of the flight vehicle. The second direction of motion may be a direction in which the flight vehicle shall fly according to the steering command.

Since the flight vehicle comprises a first direction of motion and the steering command defines a second direction, the collision-avoidance-device may determine that the vehicle will take a curved path from the first direction (direction of motion) to the second direction (direction of the steering command). Thus, the processing unit may read-out the look-up table at a table-area which is located between the first direction and the second direction. The table-area can be the complete region between first direction and the second direction, but can also be a predefined section of the region between the first direction and the second direction. For example, the table area may span directions within 20° starting from the first direction towards the second direction. In that table-area the processing unit may identify the closest obstacle. The intermediate direction may be the direction of the closest obstacle in that region.

This exemplary embodiment relates to a fourth selection mode of the collision-avoidance-device.

According to an exemplary embodiment of the invention, the steering parameter of the flight vehicle is selected from the group consisting of roll, pitch, yaw, throttle, lift and any combination thereof. Moreover, the steering parameter may comprise and acceleration and/or a deceleration of the flight vehicle.

The steering parameter may describe a position, an orientation and/or a movement of a flight vehicle in three-dimensional space or a change to the position, the orientation, and/or movement of the flight vehicle in three-dimensional space.

According to a further exemplary embodiment of the invention, the processing unit is configured for determining the correction to the steering command in real-time.

In other words, the processing unit may be configured to guarantee that the correction to the steering parameter is provided within a strict time constraint.

The corrections to steering parameters may, e.g., be calculated within one second, preferably within one millisecond. Thus, the time constraint may, e.g., have a value between one second and one millisecond.

According to a further exemplary embodiment of the invention, the first input interface is configured for receiving the position information of the obstacle from a sensor selected from the group consisting of an image sensor, an infrared sensor, a laser sensor, a thermal sensor, an ultrasonic sensor, a radar sensor, or any combination thereof.

In other words, this sensor may be provided separately to the collision-avoidance-device in the flight vehicle.

A second aspect of the invention relates to a flight vehicle comprising the collision-avoidance-device described herein. The flight vehicle may for example be an aircraft, a drone, a helicopter, a lighter-than-air-vehicle, or a micro air vehicle. Furthermore, the flight vehicle may be a space vehicle, for example, a launch vehicle, a spacecraft, or a satellite.

According to an exemplary embodiment of the invention, the flight vehicle is a drone, preferably a micro air vehicle.

A third aspect of the invention relates to a method of avoiding a collision of a flight vehicle with an obstacle. The method comprises the step of acquiring a position information of an obstacle by a collision-avoidance-device of the flight vehicle. Furthermore, the method comprises the step of determining a correction to a steering parameter of the flight vehicle on the basis of the position information by the collision-avoidance-device. Moreover, the method comprises the step of transmitting the determined correction to the steering parameter from the collision-avoidance-device to a steering device of the flight vehicle.

This method may be carried out by a collision-avoidance-device described in the context of the present invention. Moreover, the steps of the method may be carried out in the order described in the present application, in another order, or in parallel to each other.

Furthermore, the invention may also relate to a program element, which, when it is carried out by a processing unit, instructs the processing unit to carry out a method described in the context of the present application.

Moreover, the invention may also relate to a computer program product, on which the program element described in the context of the present invention is stored. For example, the computer program product may be a computer-readable medium. For example, the computer program product may be a CD, a DVD, a USB stick, a hard drive, an Internet server, or a computer chip, an IC, or an ASIC, on which the program element described in the context of the present invention is stored.

Another aspect of the present invention relates to a system comprising a sensor and a collision avoidance according to any embodiment described herein.

The aspects described above and further aspects, features and advantages of the invention may also be found in the exemplary embodiments which are described in the following with reference to the appended drawings.

### Brief description of the drawings

Fig. 1A shows a flight vehicle according to an exemplary embodiment of the invention.
Fig, 1B shows a collision-avoidance-device according to an exemplary embodiment of the invention.
Fig. 2 shows a flight vehicle and an obstacle according to an exemplary embodiment of the invention.
Fig. 3 shows a flow-chart of a method carried out by a collision-avoidance-device according to an exemplary embodiment of the invention.
Fig. 4 shows a flow-chart of a method carried out by a collision-avoidance-device according to an exemplary embodiment of the invention.
Fig. 5 shows a look-up table generated by a collision-avoidance-device according to an exemplary embodiment of the invention.
Fig. 6 shows a flow-chart for a method according to an exemplary embodiment of the invention.
Fig. 7 similar to Fig 1A shows a flight vehicle according to an exemplary embodiment of the invention.
Fig. 8 similar to Fig. 1B shows a collision-avoidance-device according to an exemplary embodiment of the invention.

The figures arc schematic and not true to scale. If, in the following description, the same reference signs are used in different figures, they relate to the same or to similar elements. The same or similar elements may, however, also be denoted by different reference signs.

### Detailed description of exemplary embodiments

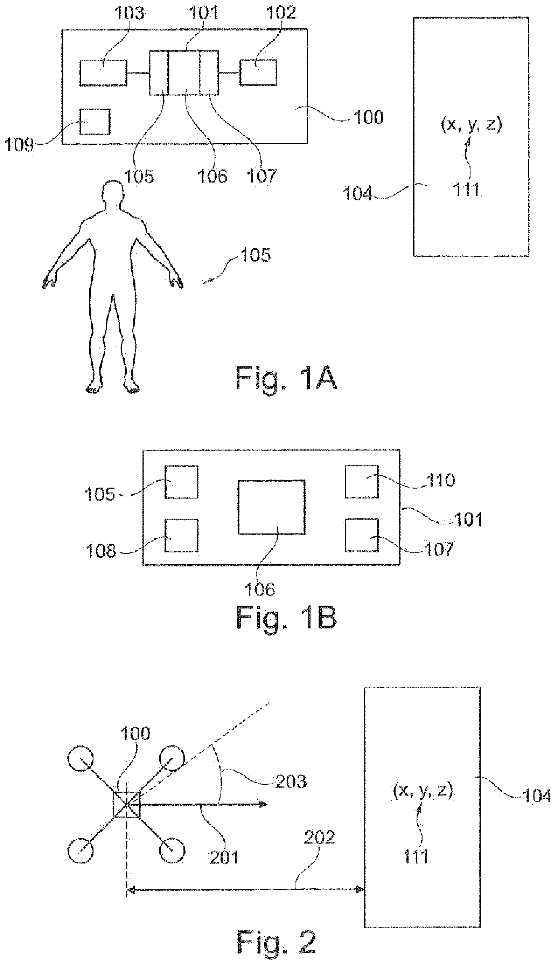

Fig. 1A shows a flight vehicle 100 according to an exemplary embodiment of the invention. Furthermore, Fig. 1A shows an obstacle 104 and an operator of the flight vehicle 105.

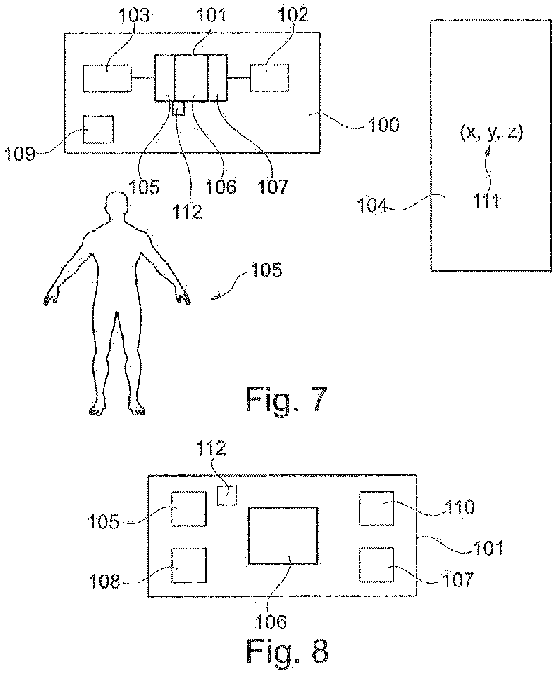

The flight vehicle 100 comprises a collision-avoidance-device 101, a steering device 102, a sensor 103 and an autopilot 109. The collision-avoidance-device 101 comprises an input interface 105 configured for receiving a position information of an obstacle, for example, a position of a point on the surface of the obstacle or a position of an extremity of the obstacle. In addition to shown interface 105 a second input interface not shown here can be comprised which is configured for receiving a steering command. This second interface is shown in Figure 7 with reference sign 112. According to this exemplary embodiment of Fig. 1A, the position information of the obstacle is acquired by the sensor 103 of the flight vehicle 100. Furthermore, the collision-avoidance-device 101 comprises a processing unit configured for determining a correction to a steering parameter of the flight vehicle on the basis of the received position information of the obstacle and, if desired, on the basis of the received steering command. Moreover, the collision-avoidance-device 101 comprises an output interface 107 configured for transmitting the determined correction to the steering parameter to the steering device 102 of the flight vehicle 100.

In this way, the sensor 103 can detect the obstacle 104 and transmit a position information 111 of the obstacle 104 to the collision-avoidance-device 101 via the input interface 105. For example, the position information 111 of the obstacle 104 is transmitted to the collision-avoidance-device 101 after a request of the collision-avoidance-device 101. Thus, the collision-avoidance-device may be configured for requesting the position information 111 actively. The position information 111 may be defined relative to the flight vehicle 100.

This steering command may, for example, be generated by an operator of the flight vehicle or by an autopilot of the flight vehicle, and is transmitted to the collision-avoidance-device 101 via a second input interface. The processing unit 106 then determines a correction to a steering parameter of the flight vehicle 100 on the basis of said position information 111 of the obstacle 104 and, if desired, on the basis of the steering command, and transmits the correction to the steering parameter to the steering device 102 via the output interface 107. The steering device 102 may then add the correction to the steering parameter to a steering parameter given by the autopilot 109 or by the operator 105 of the flight vehicle 100. As described before, the autopilot 109 may also be integrated in the steering device 102. In this way, the flight vehicle 100 is configured for automatically avoiding a collision between the flight vehicle 100 and the obstacle 104. It shall be understood that the flight vehicle 100 can either be steered by the operator 105 or by the autopilot 109.

The gist of the invention can be seen in providing a collision-avoidance-device 101 for a flight vehicle 100. The collision-avoidance-device may be configured for receiving a position information 111 of an obstacle 104 via a first input interface 105. Furthermore the collision-avoidance-device may be configured for receiving a steering command for the vehicle via a second input interface. Furthermore, the collision-avoidance-device may comprise a processing unit 106 that is configured for determining an adjustment of a steering parameter of the flight vehicle by processing the received position information of the obstacle. Said adjustment to the steering parameter may then transmitted to a steering device 102 of the flight vehicle via an output interface 107 such that the flight vehicle changes its flight behavior in order to avoid a collision with the obstacle.

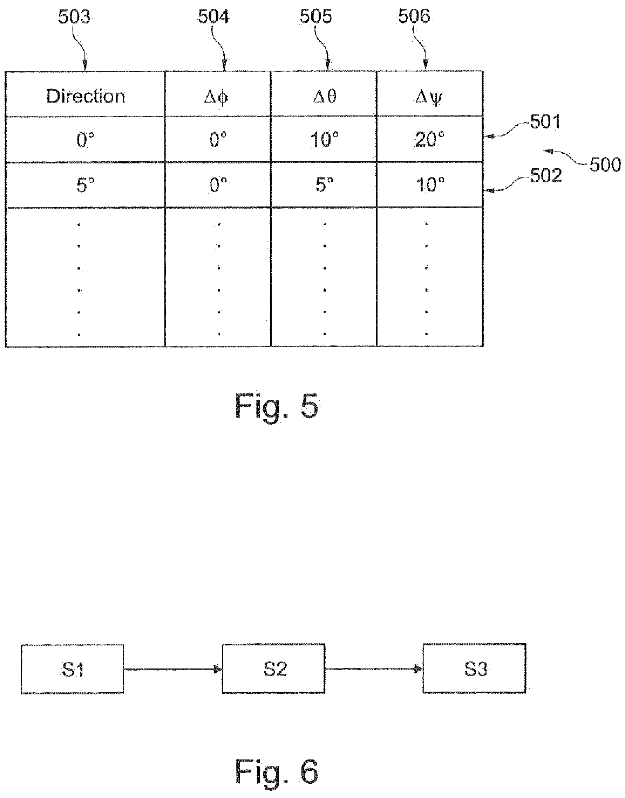

Fig. 1B shows a collision-avoidance-device 101 according to another exemplary embodiment in more detail. The collision-avoidance-device 101 comprises an input interface 105 configured for receiving a position information of an obstacle. In addition to shown interface 105 a second input interface not shown here can be comprised which is configured for receiving a steering command for the vehicle. This second interface is shown in Figure 8 with reference sign 112. Device 101 also comprises a processing unit 106 configured for determining a correction to a steering parameter of the flight vehicle on the basis of the received position information of the obstacle and, if desired, on the basis of the received steering command, and an output interface 107 configured for transmitting the determined correction to the steering parameter to a steering device of the flight vehicle. The processing unit is configured for determining the correction to the steering parameter as described in the context of this invention, e.g. on the basis of a look-up table as described. Moreover, the collision-avoidance-device 101 comprises a second input interface 108 configured for receiving a steering command for the flight vehicle. Said steering command may originate from an operator of the flight vehicle or from an autopilot of the flight vehicle. The steering command may comprise a steering parameter, for example a parameter selected from the group consisting of roll, pitch, yaw, throttle, lift, and any combination thereof. In addition, the collision-avoidance-device 101 comprises a memory unit 110 configured for storing a look-up table generated by the processing unit 106. Such a look-up table is, for example described in the context of Fig. 5. Fig. 2 shows a flight device 100, for example a quadrocopter drone, and an obstacle 104 according to another exemplary embodiment of the invention. Although not explicitly shown, the flight vehicle 100 comprises a collision-avoidance-device described in the context of the present invention. In this exemplary embodiment, a flight situation is shown, where the collision-avoidance-device determines a correction to a steering parameter and where this correction is applied by a steering device of the flight vehicle 100 such that a collision between the flight vehicle 100 and the obstacle 104 is avoided.

The flight vehicle 100 comprises a direction of movement 201 and a certain speed, which is reflected by the length of the arrow 201. Moreover, the processing unit of the collision-avoidance-device of the flight vehicle is configured for determining a position information 111 of the obstacle 104 and a distance 202 between the flight vehicle 100 and the obstacle 104. Moreover, the processing unit of the collision-avoidance-device of the flight vehicle can be configured for receiving a steering command of the vehicle. The position information 111 and/or the distance 202 is, for example, determined by means of a sensor of the flight vehicle 100. On the basis of said position information 111 and, if desired, on the basis of the said steering command, the collision-avoidance-device of the flight vehicle 100 determines a correction 203 of a steering parameter of the flight vehicle 100. Furthermore, the processing unit of the collision-avoidance-device of the flight vehicle may be configured for automatically determining a correction to a steering parameter if the distance 202 is smaller than a predefined distance. In this exemplary embodiment, the collision-avoidance-device for example determines a correction 203 to the yaw of the flight vehicle 100 such that a collision between the flight vehicle 100 and the obstacle 104 is avoided.

This exemplary embodiment represents a simplified example. The collision-avoidance-device may also determine a plurality of corrections to a plurality of steering parameters, which may be more complex.

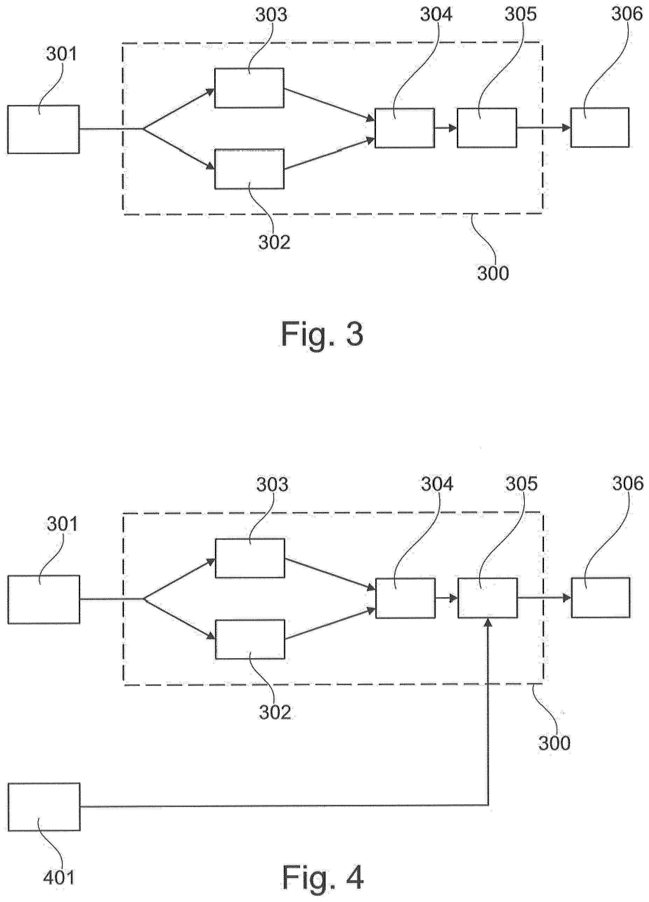

In Fig. 3, a flow-chart of a method carried out by a collision-avoidance-device according to an exemplary embodiment is shown. The box 300 encloses the steps that are carried out by the processing unit of the collision-avoidance-device. In a first step 301, a position information of one or more obstacles around the flight vehicle is determined. This method step 301 is carried out by a device, for example a sensor, positioned outside of the collision-avoidance-device. Thus, the collision-avoidance-device does not need to have sensors for determining positions of obstacles around the flight vehicle. In other words, the position information of obstacles around the flight vehicle is transmitted to the processing unit of the collision-avoidance-device via a first input interface of the collision-avoidance-device. The position information may be processed by some other device before it is transmitted to the processing unit.

The method shown in Figure 3 may be supplemented by the step of acquiring a steering command for the flight vehicle.

In method step 303, which is carried on the processing unit of the collision-avoidance-device, a current state of the flight vehicle relative to the obstacle is determined. For example, a heading relative to the obstacle and/or a speed relative to the obstacle of the flight vehicle is determined. Thus, the flight vehicle state is determined relative to the obstacle such that absolute positioning (for example by means of GPS) is not required. In another step 302, which is carried out on the processing unit of the collision-avoidance-device, a distance between the flight vehicle and the obstacle is determined on the basis of the position of the obstacle. In step 304, which is carried out on the processing unit of the collision-avoidance-device, the determined state of the flight vehicle (of step 303) and the determined distance of the obstacle (of step 302) are processed for generating a look-up table. The look-up table comprises a plurality of entries, wherein each entry comprises a direction and a limit of a steering parameter. On the basis of said limit and on the basis of a received steering command a correction to a steering parameter is determined, which, if said correction is added to a steering parameter, causes the flight vehicle to change its flight behavior in order to avoid a collision with the obstacle. In other words, a look-up table with a certain number (N) of directions centered on the flight vehicle is generated, wherein each direction comprises a limit of a steering parameter. In step 305, which is also carried out by the processing unit of the collision-avoidance-device, one entry of the look-up table is selected and/or read out. The limit of the steering parameter of the selected entry of the look-up table is then used or processed for determining the correction transmitted to the steering device of the flight vehicle. In a further step 306, the transmitted correction to the steering parameter is used for steering the flight vehicle. This step is not carried out by the collision-avoidance-device but, for example, by a steering device or an autopilot of the flight vehicle. The correction to the steering parameter transmitted from the collision-avoidance-device to the steering device is added to a steering parameter originating from a steering command, which is defined by an operator or an autopilot of the flight vehicle. Thus, in other words, the collision-avoidance-device does not provide a new command but only determines and transmits a correction to a steering parameter that can be added to a steering parameter defined by a steering command originating from an operator or an autopilot of the flight vehicle.

In a first selection mode of the collision-avoidance-device, the processing unit can be configured for choosing the entry of the look-up table which corresponds to the direction of the closest obstacle, In other words, the processing unit is configured for choosing the entry of the look-up table that comprises a direction which matches the direction of the closest obstacle most closely. The closest obstacle may be the obstacle having the least distance to the flight vehicle or may be the only obstacle, in the case that only one obstacle is detected by the sensor.

In Fig. 4, a flow-chart for a method carried out by a processing unit of a collision-avoidance-device according to another exemplary embodiment is shown. The reference signs 301, 302, 303, 304, 305 and 306 are described with reference to Fig. 3. In step 401, a steering command for the flight vehicle is received or generated. This steering command may, for example, be generated by an operator of the flight vehicle or by an autopilot of the flight vehicle.

In step 305, which is carried out by the processing unit of the collision-avoidance-device, the transmitted steering command is used for selecting an entry of the look-up table generated in step 304. In the second selection mode of the collision-avoidance-device, an entry of the look-up table is selected, which comprises a direction which corresponds to the direction of motion of the flight vehicle. This selection mode is carried out if the steering command obtained in step 401 is equal to zero. This may be the case if the collision-avoidance-device is capable of receiving steering commands but actually receives no steering command. In the third selection mode of the collision-avoidance-device, the entry of the look-up table is chosen, which comprises a direction that corresponds to the direction of motion defined by the steering command. This third selection mode is carried out if the steering command obtained in step 401 defines a direction of motion of the flight vehicle (also denoted as second direction of motion). In the fourth selection mode, the entry of the look-up table is selected, which comprises a direction that lies between the first direction of motion of the flight vehicle and the second direction of motion of the flight vehicle.

In Fig. 5, a look-up table 500 generated by the processing unit of the collision-avoidance-device according to an exemplary embodiment is shown. In this exemplary embodiment, the look-up table 500 comprises four columns 503 to 506. The column 503 corresponds to the direction around the flight vehicle, the column 504 to the limit to the roll (Δϕ), the column 505 to the limit to the pitch (Δϑ), and the column 506 to the limit of the yaw (Δψ). The look-up table 500 comprises a plurality of entries 501, 502 corresponding to different directions around the flight vehicle. For example, the entries 501, 502 cover all directions around the flight vehicle in 5° steps. Each entry 501, 502 comprises limits to the steering parameters 504, 505 and 506. The look-up table 500 is generated and/or updated by the processing unit of the collision-avoidance-device and is stored on a memory unit of the collision-avoidance-device as exemplarily shown in Fig. 1B. The look-up table 500 may be generated and/or updated with a frequency that is lower than the frequency of reading out or selecting entries of fhe look-up table 500 for determining the correction to the steering parameter transmitted to the steering device of the flight vehicle. For example, the look-up table 500 is generated or updated with a frequency corresponding to a frequency of a sensor for detecting obstacles in the vicinity of the flight vehicle.

In the following a specific example of a look up table is presented.

| **Index** | **Angle** | **Roll** | **Pitch** |
|---|---|---|---|
| 1 | 30 | 2,22 | 0,20 |
| 2 | 60 | 2,12 | 0,50 |
| 3 | 90 | 0,00 | 0,00 |
| 4 | 120 | 0,00 | 0,00 |
| 5 | 150 | 0,25 | 0,31 |
| 6 | 180 | -0,65 | 0,61 |
| 7 | 210 | -0,77 | 0,11 |
| 8 | 240 | 1,40 | 0,11 |
| 9 | 270 | -0,10 | 0,42 |
| 10 | 300 | 0,00 | 0,00 |
| 11 | 330 | 0,00 | 0,00 |
| 12 | 360 | -2,22 | 0,22 |

It shall be noted that the values for the limits in the look-up table 500 are merely exemplary. The limits can, of course, have other values. Moreover, each limit 504, 505 and 506 may also comprise more than one value, e.g. a value representing a lower boundary and a value representing an upper boundary of the limit.

Fig. 6 shows a flow-chart for a method of avoiding a collision of a flight vehicle with an obstacle according to an exemplary embodiment of the invention. The method comprises step S1 of acquiring a position information of an obstacle by a collision-avoidance-device of the flight vehicle, step S2 of determining a correction to a steering parameter of the flight vehicle on the basis of the position information by the collision-avoidance-device, and step S3 of transmitting the determined correction to the steering parameter from the collision-avoidance-device to a steering device of the flight vehicle.

Other variations to the disclosed embodiments can be understood and effected by those skilled in the art in practicing the claimed invention, from a study of the drawings, from the disclosure, and from the appended claims. In the claims, the word "comprising" does not exclude other elements or steps and the indefinite article "a" or "an" does not exclude a plurality.

## Claims

1. Collision-avoidance-device (101) for a flight vehicle (100), comprising:
a first input interface (105) configured for receiving a position information (111) of an obstacle (104);
a second input interface (108) configured for receiving a steering command for the flight vehicle;
a processing unit (106) configured for determining a correction (203) to a steering parameter of the flight vehicle on the basis of the received position information; and
an output interface (107) configured for transmitting the determined correction to the steering parameter to a steering device (102) of the flight vehicle.

2. Collision-avoidance-device (101) according to claim 1,
wherein the processing unit (106) is configured for generating a look-up table (500) on the basis of the received position information, which look-up table comprises a plurality of entries (501, 502);
wherein each entry of the plurality of entries comprises a direction (503) and a limit of a steering parameter (504, 505, 506) for said direction;
wherein the processing unit (106) is configured for selecting an entry of the look-up table; and
wherein the processing unit is configured for determining the correction to the steering parameter on the basis of the limit of the steering parameter of the selected entry and the received steering command.

3. Collision-avoidance-device (101) according to claim 2,
wherein the processing unit (106) is configured for determining a plurality of distances (202) between the flight vehicle and a plurality of obstacles and/or for determining a current state of the flight vehicle; and
wherein the processing unit (106) is configured for selecting the entry of the look-up table on the basis of the current state of the flight vehicle and/or on the basis of a direction of a closest obstacle of the plurality of obstacles.

4. Collision-avoidance-device (101) according to claim 2 or 3,
wherein the processing unit (106) is configured for determining a distance (202) of the flight vehicle to the obstacle; and
wherein the processing unit (106) is configured for selecting the entry of the look-up table on the basis of the closest obstacle, if the determined distance to the closest obstacle is less than a given distance.

5. Collision-avoidance-device (101) according to one of claims 2 to 4,
wherein the processing unit is configured for determining a current state of the flight vehicle;
wherein the current state of the flight vehicle comprises a direction of motion of the flight vehicle relative to the obstacle; and
wherein the processing unit (106) is configured for selecting an entry of the look-up table which entry comprises a direction that deviates least from the determined direction of motion of the flight vehicle.

6. Collision-avoidance-device (101) according to claim 5,
wherein the processing unit (106) is configured for selecting two entries of the look-up table which entries comprise directions that deviate least from the determined direction of motion of the flight vehicle; and
wherein the processing unit is configured for determining the correction to the steering parameter by interpolating the two limits of the steering parameter of the two selected entries.

7. Collision-avoidance-device (101) according to one of claims 2 to 6,
wherein the processing unit (106) is configured for selecting the entry of the look-up table on the basis of the received steering command.

8. Collision-avoidance-device (101) according to one of claims 2 to 7,
wherein the processing unit (106) is configured for determining a current state of the flight vehicle;
wherein the current state of the flight vehicle comprises a first direction of motion of the flight vehicle relative to the obstacle if the collision-avoidance-device determines that the flight vehicle is moving;
wherein the steering command is equal to zero or defines a second direction of motion of the flight vehicle; and
wherein the processing unit is configured for selecting the entry of the look-up table that comprises a direction which deviates least from the first direction if the steering command is zero and the collision-avoidance-device determines that the flight vehicle is moving, or wherein the processing unit is configured for selecting the entry of the look-up table that comprises a direction which deviates least from the second direction if the steering command defines the second direction and the collision-avoidance-device determines that the flight vehicle is not moving.

9. Collision-avoidance-device (101) according to one of claims 2 to 8,
wherein the processing unit (106) is configured for determining a current state of the flight vehicle;
wherein the current state of the flight vehicle comprises a first direction of motion of the flight vehicle;
wherein the steering command from the operator defines a second direction of motion of the flight vehicle; and
wherein the processing unit is configured for selecting an entry of the look-up table that comprises a direction which lies in between the first direction of motion and the second direction of motion of the flight vehicle.

10. Collision-avoidance-device (101) according to any of the preceding claims,
wherein the steering parameter of the flight vehicle is selected from the group consisting of roll, pitch, yaw, throttle, lift and any combination thereof.

11. Collision-avoidance-device (101) according to any of the preceding claims,
wherein the processing unit (106) is configured for determining the correction to the steering command in real-time.

12. Flight vehicle (100), preferably a drone, more preferably a micro air vehicle, comprising the collision-avoidance-device (101) according to any of the preceding claims.

13. System comprising a sensor and the collision-avoidance device according to any of claims 1 to 11.

14. Method of avoiding a collision of a flight vehicle with an obstacle, the method comprising the steps:
acquiring a position information of an obstacle by a collision-avoidance-device of the flight vehicle (S1);
acquiring a steering command for the flight vehicle
determining a correction to a steering parameter of the flight vehicle on the basis of the position information by the collision-avoidance-device (S2); and
transmitting the determined correction to the steering parameter from the collision-avoidance-device to a steering device of the flight vehicle (S3).
